# EUROPÄISCHE PATENTSCHRIFT

(11) **EP 3 828 142 B1**
(45) Veröffentlichungstag und Bekanntmachung des Hinweises auf die Patenterteilung: **02.07.2025**
(21) Anmeldenummer: 20209789.5
(22) Anmeldetag: 25.11.2020
(51) Int. Cl.: C02F 1/44, E03B 1/04, E03B 5/02, E03B 7/07, C02F 1/00

(54) **LEITUNGSANORDNUNG ZUR VORBEHANDLUNG VON TRINKWASSER UND VERFAHREN ZUM BETREIBEN DER LEITUNGSANORDNUNG**
LINE ARRANGEMENT FOR THE PRETREATMENT OF DRINKING WATER AND METHOD FOR OPERATING THE LINE ARRANGEMENT
SYSTÈME DE CONDUITE DESTINÉ AU PRÉ-TRAITEMENT DE L'EAU POTABLE ET PROCÉDÉ DE FONCTIONNEMENT DU SYSTÈME DE CONDUITE

(30) Priorität: 29.11.2019 DE 102019132463
(43) Veröffentlichungstag der Anmeldung: 02.06.2021
(73) Patentinhaber: EXERGENE Technologie GmbH, 22397 Hamburg (DE)
(72) Erfinder: WERMTER, Carsten, 20149 Hamburg (DE)
(74) Vertreter: Cohausz & Florack

(56) Entgegenhaltungen:
- EP-A1- 2 161 244
- WO-A1-2013/095278
- DE-A1- 102015 114 473
- DE-T5- 112017 001 324

## Beschreibung

Die Erfindung betrifft eine Leitungsanordnung zur Vorbehandlung von Trinkwasser, mit einer Einlassleitung und einer Auslassleitung, mit einem zwischen der Einlassleitung und der Auslassleitung angeordneten Leitungsabschnitt, mit mindestens einer in dem Leitungsabschnitt angeordneten Filtereinheit und mit einer in dem Leitungsabschnitt angeordneten Pumpe. Die Erfindung betrifft auch ein Verfahren zum Betreiben einer solchen Leitungsanordnung.

Für den Betrieb einer Trinkwasseranlage ist es von besonderer Bedeutung das Entstehen und Vermehren von potentiell pathogene Keimen und Mikroorganismen zu verhindern oder zumindest zu minimieren.

Eine effektive Maßnahme stellt das Installieren einer Filtereinheit in der Leitungsanordnung dar, die als Barriere die Keime und Mikroorganismen aus der Leitungsanordnung heraushalten sollen. Die Filtereinheiten weisen neben dem Zu- und Ablauf insbesondere feinporige Filter wie Mikro-, Ultra oder Nanofilter oder Umkehrosmosefilter auf.

Die genannten Filtereinheiten erzeugen einen Widerstand, der praktisch linear mit dem Wasservolumenstrom steigt, wodurch ein Druckabfall über die Filtereinheit auftritt. Bei geringer Abnahme entsteht nur ein geringer Druckabfall über dem Filter.

Bei allen Trinkwasseranlagen, insbesondere bei größeren Trinkwasseranlagen schwankt der Wasserbedarf stark. Beispielsweise werden die Duschen in einem Hotel vorzugsweise morgens früh gleichzeitig von vielen Gästen benutzt.

Daher werden die Filter in den Filtereinheiten in Bezug auf Ihre Filterfläche so ausgelegt, dass der Wasserdruck strömungsabwärts der Filtereinheit auch bei starker Wasserentnahme ausreichend groß bleibt, so dass ein Mindestdruck in der Leitungsanordnung, der beispielsweise beim Duschen benötigt wird, aufrechterhalten wird.

Daher müssen Filteranlagen immer Objekt-spezifisch und sehr groß ausgelegt werden, um den Spitzenvolumenstrom ohne zu hohen Druckabfall zu bewältigen. Die meiste Zeit des Tages liegt jedoch eine geringe oder gar keine Wasserentnahme vor. Daher wird eine auf den Spitzenstrom ausgelegte Filteranlage sehr selten wirklich auslegungsgemäß durchströmt.

Werden jedoch Filter in Filtereinheiten, die eine große Kontaktoberfläche zum Wasser darstellen, nicht, selten und/oder zu gering durchströmt, dann bieten sie Mikroorganismen eine geeignete Besiedelungsoberfläche. Eine Lösung des Problems der Stagnation ist in der EP 2 474 506 B1 beschrieben. Dort ist eine Pumpe in einer Bypass- bzw. Rückführungsleitung vorgesehen, die für einen Durchfluss sorgt, auch wenn keine Wasserentnahme erfolgt.

Aus der DE 11 2017 001324 T5 (D1) ist ein Wasseraufbereiter mit einer Filtervorrichtung bekannt. Eine Druckerhöhungspumpe zum Betrieb des Wasseraufbereiters wird eingeschaltet, wenn der gemessene Druck über einem ersten vorgegebenen Druck liegt und abgeschaltet, wenn der gemessene Druck unterhalb eines zweiten vorgegebenen Drucks liegt.

Daher liegt der vorliegenden Erfindung das technische Problem zugrunde, eine kompakte und gut standardisierbare Leitungsanordnung zur Vorbehandlung von Trinkwasser zu bauen.

Das zuvor aufgeführte technische Problem wird erfindungsgemäß bei einer Leitungsanordnung der eingangs genannten Art dadurch gelöst, dass eine Messeinrichtung zur Messung der Druckdifferenz zwischen dem Zulauf und dem Ablauf der Filtereinheit vorgesehen ist, dass eine mit der Messeinrichtung verbundenen Steuereinheit vorgesehen ist, dass die Steuereinheit eingerichtet ist, oberhalb eines vorgegebenen Grenzwertes der Druckdifferenz die Pumpe zum zumindest teilweisen Ausgleich der Druckdifferenz anzusteuern und dass die Steuereinheit eingerichtet ist, unterhalb eines vorgegebenen zweiten Grenzwertes die Pumpe abzuschalten.

Die beschriebene Leitungsanordnung weist somit eine Filtereinheit auf, deren Filterfläche nicht mehr auf den Spitzenvolumenstrom, also den anzunehmenden maximalen Volumenstrom bei vorgegebener Druckdifferenz ausgelegt werden muss. Der Einsatz der zusätzlichen Pumpleistung erhöht den eingangsseitigen Druck vor der Filtereinheit und damit zu einem erhöhten Durchfluss durch die Filtereinheit, wodurch der Druckabfall in Strömungsrichtung hinter der Filtereinheit verringert wird.

Die Fläche des Filters, beispielsweise der Filtermembran, innerhalb der Filtereinheit ist somit nicht mehr auf eine maximale Druckdifferenz bei einem anzunehmenden Spitzenvolumenstrom, sondern auf einen wesentlich geringeren Volumenstrom ausgelegt. Um einen nicht erwünschten Druckabfall bei hohem Volumenstrom zu verhindern, wird die Pumpe so ausgelegt, dass sie die notwendige Druckdifferenz ausgleichen kann.

Somit können kompakte und preiswerte Filtereinheiten in Leitungsanordnungen gebaut werden, die dauerhaft hygienisch einwandfreies Wasser an die Installation abgeben. Die Filteranlagen müssen daher nicht mehr auf jede einzelne Leitungsanordnung angepasst werden, sondern sind im Gegenteil gut standardisierbar. Dadurch ergeben sich Skaleneffekte und wirtschaftliche Verbesserungen.

Die Vorteile der beschriebenen Leitungsanordnung sind ein kompakter Aufbau, Filter mit wenig Platzbedarf und Vermeiden von Druckabfall in der Leitungsanordnung.

Mit der Formulierung, dass die Steuereinheit für bestimmte Steuerfunktionen "eingerichtet ist", wird verstanden, dass die Steuereinheit eine programmierbare elektronische Schaltung aufweist, mit den Drucksensoren über eine Kabelverbindung und/oder eine Funkverbindung verbunden ist und Messwerte aufnimmt sowie mit der anzusteuernden Pumpe über ein Kabel und/oder eine Funkstrecke verbunden ist und Steuersignale überträgt. Die Steuereinheit wertet mittels eines in der elektronischen Schaltung ablaufenden Algorithmus die aufgenommenen Messwerte aus, erzeugt Steuersignale entsprechend der Regelanweisungen und Regelbedingungen und überträgt die Steuersignale an die Pumpe.

In bevorzugter Weise ist der Filter der mindestens einen Filtereinheit aus Keramik, insbesondere einer Keramikmembran, aus Edelstahl, insbesondere einer Edelstahlmembran, oder aus einem harten Kunststoff hergestellt. Diese Filter sind resistent gegen besonders hohe Druckdifferenzen von beispielsweise 2 bis 10 bar. Die Filtereinheit ist also so robust ausgelegt, dass eine sehr hohe Druckdifferenz anliegen kann.

Des Weiteren ist eine Bypassleitung, die die Funktion einer Rückführung des gefilterten Wassers hat und somit auch als Rückführungsleitung bezeichnet werden kann, vorgesehen und die Steuereinheit ist eingerichtet, mittels der Pumpe einen Volumenstrom durch die Filtereinheit und durch die Bypassleitung zu erzeugen. Dabei kann die Bypassleitung ebenfalls mit einer Pumpe ausgerüstet werden. Das Umwälzen des Wassers durch die Bypassleitung und die Filtereinheit verhindert eine Stagnation auf der Reinwasserseite des Filters bzw. einen geringen Durchfluss durch den Filter. Damit wird die Gefahr der retrograden Verkeimung der Reinwasserseite dauerhaft und zuverlässig verhindert.

In weiter bevorzugter Weise ist im beschriebenen Leitungsabschnitt und in der Bypassleitung kein Rückflussverhinderer oder ein Ventil angeordnet, so dass bei besonders hohem Wasserbedarf ein Teilstrom über die Bypassleitung direkt zur Auslassleitung fließen kann, ohne vorab über die Filtereinheit geflossen zu sein.

Alternativ dazu kann es vorteilhaft sein, dass ein Rückflussverhinderer, insbesondere ein Rückschlagventil, in dem Auslassleitung und/oder in der Bypassleitung angeordnet ist. Bei einer Anordnung des Rückflussverhinderers in Bypassleitung wird zuverlässig verhindert, dass nicht gefiltertes Leitungswasser zur Auslassleitung gelangen kann. Befindet sich dagegen der Rückflussverhinderer in der Auslassleitung, dann wird verhindert, dass die Reinwasserseite der Filtereinheit mit ungefiltertem Waser beaufschlagt wird.

Das oben aufgezeigte technische Problem wird erfindungsgemäß auch durch ein Verfahren zum Betreiben einer Leitungsanordnung zur Vorbehandlung von Trinkwasser gelöst, bei dem ein Volumenstrom durch eine Filtereinheit durch Entnahme von Trinkwasser erzeugt wird, bei dem der Druckabfall über die Filtereinheit gemessen wird, bei dem bei Erreichen des Druckabfalls oberhalb eines ersten Grenzwertes mittel einer Pumpe zum Erzeugen eines Druckausgleichs eingeschaltet wird und bei dem bei Unterschreiten des Druckabfalls unterhalb eines zweiten Grenzwertes die Pumpe abgeschaltet wird.

Das beschriebene Verfahren weist die gleichen Eigenschaften und Vorteile auf, wie sie im Zusammenhang mit der Leitungsanordnung beschrieben worden sind.

In bevorzugter Weise ist vorgesehen, dass nach einer vorgegebenen Zeitdauer nach einem letzten Einschalten die Pumpe für ein Erzeugen eines Volumenstroms durch die Filtereinheit und durch eine Bypassleitung eingeschaltet wird. Dadurch wird die oben beschriebene Zirkulation zum Verhindern von Stagnation erreicht.

Im Folgenden wird die Erfindung anhand von Ausführungsbeispielen mit Bezug auf die Zeichnung erläutert. In der Zeichnung zeigen
- Fig. 1: ein erstes Ausführungsbeispiel einer erfindungsgemäßen Leitungsanordnung,
- Fig. 2: ein zweites Ausführungsbeispiel einer erfindungsgemäßen Leitungsanordnung und
- Fig. 3: ein drittes Ausführungsbeispiel einer erfindungsgemäßen Leitungsanordnung.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

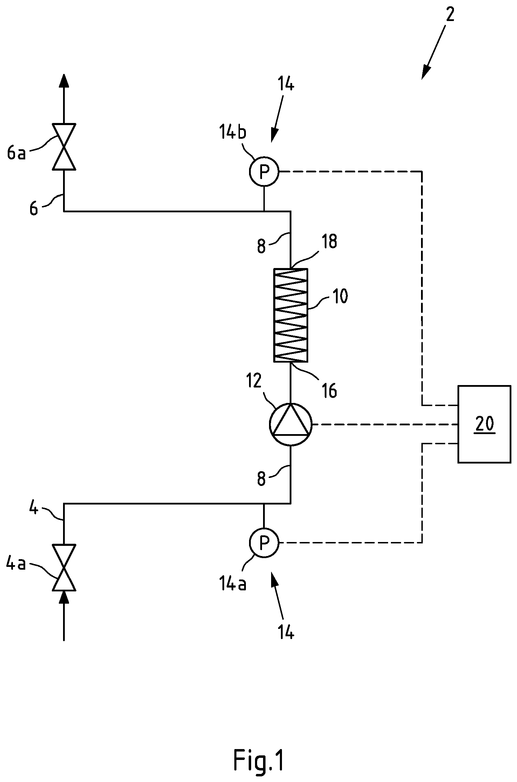

Fig. 1 zeigt ein erstes Ausführungsbeispiel einer Leitungsanordnung 2 zur Vorbehandlung von Trinkwasser. Die Leitungsanordnung 2 weist eine Einlassleitung 4 und eine Auslassleitung 6 auf, die mit Absperrventilen 4a und 6a versehen sind. Die Einlassleitung 4 ist mit der Stadtwasserleitung verbunden und die Auslassleitung ist mit der in dem zugehörigen Gebäude oder Gebäuden verbauten Trinkwasserinstallation verbunden. Die Trinkwasserinstallation versorgt einzelne Verbrauchsstellen innerhalb des Gebäudes wie beispielsweise Waschbecken, Toilettenspülungen und Duschen.

Zwischen den beiden Leitungen 4 und 6 ist ein Leitungsabschnitt 8 angeordnet, in dem eine Filtereinheit 10 angeordnet ist, die mit einem feinporigen Filter zum Herausfiltern von Keimen und/oder Mikroorganismen versehen ist.

Weiterhin ist eine Pumpe 12 in dem Leitungsabschnitt 8 angeordnet, die einen zusätzlichen Druckaufbau in dem Leitungsabschnitt 8 erzeugen kann.

Des Weiteren ist eine Messeinrichtung 14 mit Drucksensoren 14a und 14b zur Messung der Druckdifferenz zwischen dem Zulauf 16 und dem Ablauf 18 der Filtereinheit 10 vorgesehen.

Mit den Drucksensoren 14a und 14b ist eine Steuereinheit 20 verbunden (gestrichelte Linien), um die Messwerte der Drucksensoren 14a und 14b auszuwerten. Dadurch kann die Steuerungseinheit die Druckdifferenz ΔP zwischen den beiden Messstellen bestimmen.

Die Steuereinheit 16 ist über eine Leitung (gestrichelt dargestellt) mit der Pumpe 12 verbunden und weiterhin eingerichtet, oberhalb eines vorgegebenen ersten Grenzwertes ΔP₁ der Druckdifferenz die Pumpe 12 zum zumindest teilweisen Ausgleich der Druckdifferenz anzusteuern. Durch den Betrieb der Pumpe 12 strömt vermehrt Wasser durch die Filtereinheit 10 und baut auf der Seite des Ablaufes 18 einen erhöhten Druck auf, der die Druckdifferenz ΔP absenkt.

Die Steuereinheit 20 ist weiterhin eingerichtet, unterhalb eines vorgegebenen zweiten Grenzwertes ΔP₂ die Pumpe abzuschalten. Damit wird vermieden, dass sich auf der Seite des Ablaufs 18 der Filtereinheit 10 ein zu hoher Druck aufbaut.

Die beiden Grenzwerte ΔP₁ und ΔP₂ können gleich groß gewählt werden. In bevorzugter Weise ist aber ΔP₁ größer als ΔP₂, um eine Hysterese zu verwirklichen und ein zu oft auftretendes Ein- und Ausschalten der Pumpe 12 zu vermeiden.

Weiterhin besteht der Filter der Filtereinheit 10 aus Keramik, insbesondere einer Keramikmembran, aus Edelstahl, insbesondere einer Edelstahlmembran, oder aus einem harten Kunststoff. Die genannten Materialien sind widerstandskräftig gegen besonders hohe Druckdifferenzen von beispielsweise größer 2 bis 10 bar, vorzugsweise 2 bis 5 bar. Das Filtermodul ist daher so robust ausgelegt, dass es eine sehr hohe Druckdifferenz aushält.

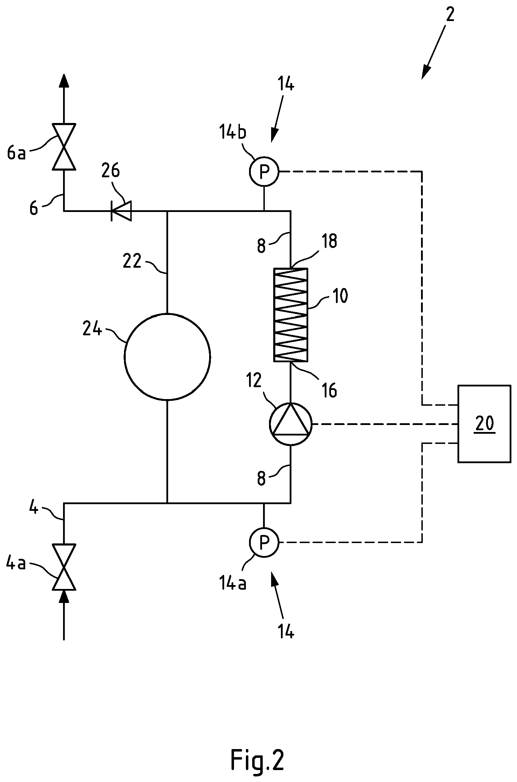

Fig. 2 zeigt ein weiteres Ausführungsbeispiel einer erfindungsgemäßen Leitungsanordnung 2, bei der gleiche Bezugszeichen gleiche Bestandteile kennzeichnen, wie sie im Zusammenhang mit Fig. 1 beschrieben worden sind.

Zusätzlich zu dem Leitungsabschnitt 8 ist eine Bypassleitung 22 vorgesehen und die Steuereinheit 20 ist eingerichtet, mittels der Pumpe 12 einen Volumenstrom durch die Filtereinheit 10 und durch die Bypassleitung 22 zu erzeugen. Die Bypassleitung 22 hat dabei die Funktion einer Rückführung des gefilterten Wassers hat und kann somit auch als Rückführungsleitung bezeichnet werden. Dadurch ergibt sich bei keiner oder nur sehr geringer Wasserabnahme durch die Auslassleitung 6 durch ein Betreiben der Pumpe 12 ein Volumenstrom durch die Filtereinheit, um diese vor einer Stagnation zu schützen.

Wird dagegen eine große Menge Wasser aus der Leitungsanordnung 2 über die Auslassleitung 6 entnommen, kann durch die Pumpe 12 der Druck in dem strömungsabwärts der Filtereinheit 10 angeordneten Abschnitt - wie beschrieben - erhöht werden. Steigt der Volumenstrom durch die Auslassleitung 6 weiter an, so kann zunehmend auch ein Teilstrom an Wasser durch die Bypassleitung 22 ohne eine Filterung in der Filtereinheit 10 in das an die Leitungsanordnung 2 angeschlossene Trinkwassersystem strömen.

Bei der Ausgestaltung des in Fig. 2 dargestellten Ausführungsbeispiels ist weiterhin für eine Zwischenspeicherung von Trinkwasser ein Speicher 24 in der Bypassleitung 22 angeordnet, in dem eine Bevorratung von ungefiltertem oder gefiltertem Trinkwasser erfolgt. Wenn dann ein Spitzenvolumenstrom an Trinkwasser angefordert wird, kann für eine erste Zeitspanne des Auftretens des Spitzenvolumenstroms filtriertes Wasser, welches dort gespeichert wurde direkt in die Installation fließen. Bei extrem hohem Spitzenverbrauch kann auch mal kurzfristig unfiltriertes Wasser in die Installation fließen.

Fig. 2 zeigt als weitere Option die Anordnung eines Rückschlagventils 26 im Leitungsabschnitt 6. Durch das Rückschlagventil 26 wird sichergestellt, dass kein nicht gefiltertes Trinkwasser zum strömungsabwärts gelegenen Ablauf 18 der Filtereinheit 10 oder in die Bypassleitung 22 gelangen kann. Insbesondere bleibt die Reinseite des Filters unbeeinträchtigt. Gleichwohl verhindert das Rückschlagventil 26 nicht die Zirkulation durch den Leitungsabschnitt 8 und die Bypassleitung 22 während des Betriebes der Pumpe 12.

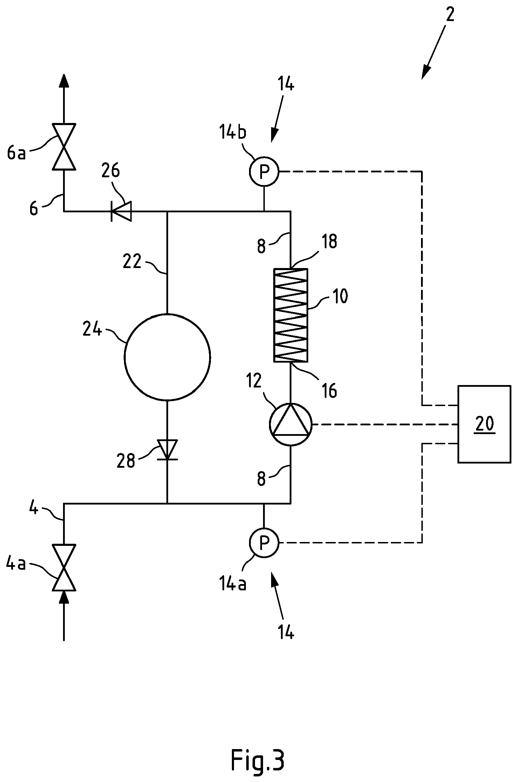

Fig. 3 zeigt eine ähnliche Anordnung wie in Fig. 2, wobei wieder die gleichen Bezugszeichen die gleichen Bauteile wie in den Fig. 1 und 2 kennzeichnen.

Bei diesem Ausführungsbeispiel ist ein weiteres Rückschlagventil 28 in der strömungszugewandten Seite des Speichers 24 in Form eines Membranausgleichsgefäßes angeordnet. Das Rückschlagventil 28 verhindert einen Zustrom von ungefiltertem Trinkwasser aus der Stadtversorgung über die Einlassleitung 4 in die Leitungsanordnung 2 und somit in das daran angeschlossene Trinkwassersystem. Gleichwohl verhindert das Rückschlagventil 28 nicht die Zirkulation durch den Leitungsabschnitt 8 und die Bypassleitung 22 während des Betriebes der Pumpe 12.

In dem Speicher 24 erfolgt eine Zwischenspeicherung von gefiltertem Trinkwasser in der Bypassleitung 22. Wenn dann ein kurzzeitiger Spitzenvolumenstrom an Trinkwasser angefordert wird, kann für eine erste Zeitspanne des Auftretens des Spitzenvolumenstroms dieses Reservoir für eine Aufrechterhaltung des Druckes in der Auslassleitung 6 eingesetzt werden, ohne dass ein zu großer Druckabfall auftritt.

Im Folgenden wird ein Beispiel angegeben. Der Wasserdruck am Hauseingang aus der Stadtversorgung und somit in der Einlassleitung 4 beträgt 4 bar. Der minimal erwünschte Druck in der an die Leitungsanordnung 2 angeschlossenen Trinkwasserinstallation beträgt 3 bar. Der maximale Volumenstrom wird mit 20 l/min angenommen. Der feinporige Filter in der Filtereinheit 10 wird so dimensioniert, dass bei dem angenommenen maximalen Volumenstrom von max. 50% des Spitzenvolumenstroms der Druckabfall ΔP₁ maximal 1 bar beträgt.

Die Pumpe 12 wird dann so ausgelegt, dass sie bei Bedarf, also bei einer Druckdifferenz ΔP₁ von mehr als 1 bar, einen zusätzlichen Druck aufbringt, um den zusätzlichen Druckabfall beim Spitzenvolumenstrom auszugleichen. Die Pumpe wird dann wieder abgeschaltet, wenn der Druckabfall ΔP₂ kleiner als 0,8 bar ist. Dadurch wird ein zu häufiges Ein- und Ausschalten der Pumpe vermieden.

Findet jedoch über einen Zeitraum von beispielsweise 6 Stunden keine Wasserentnahme statt, dann wird die Pumpe 12 unabhängig von einem Auftreten eines Spitzenvolumenstroms für einen vorgegebenen Zeitraum von ca. 30 min eingeschaltet, um eine längere Stagnation auf der Filteroberfläche in der Filtereinheit 10 zu verhindern.

## Patentansprüche

1. Leitungsanordnung zur Vorbehandlung von Trinkwasser,
- mit einer Einlassleitung (4) und einer Auslassleitung (6),
- mit einem zwischen der Einlassleitung (4) und der Auslassleitung (6) angeordneten Leitungsabschnitt (8),
- mit mindestens einer in dem Leitungsabschnitt (8) angeordneten Filtereinheit (10) und
- mit einer in dem Leitungsabschnitt (8) angeordneten Pumpe (12) und
**dadurch gekennzeichnet,**
- **dass** eine Messeinrichtung (14; 14a, 14b) zur Messung der Druckdifferenz zwischen dem Zulauf (16) und dem Ablauf (18) der Filtereinheit (10) vorgesehen ist,
- **dass** eine mit der Messeinrichtung (14; 14a, 14b) verbundenen Steuereinheit (20) vorgesehen ist,
- **dass** die Steuereinheit (20) eingerichtet ist, oberhalb eines vorgegebenen ersten Grenzwertes der Druckdifferenz die Pumpe (12) zum zumindest teilweisen Ausgleich der Druckdifferenz anzusteuern, und
- **dass** die Steuereinheit (20) eingerichtet ist, unterhalb eines vorgegebenen zweiten Grenzwertes die Pumpe (12) abzuschalten.

2. Leitungsanordnung nach Anspruch 1,
**dadurch gekennzeichnet,**
**dass** der Filter der mindestens einen Filtereinheit (10) aus Keramik, insbesondere einer Keramikmembran, oder aus Edelstahl, insbesondere einer Edelstahlmembran, hergestellt ist.

3. Leitungsanordnung nach Anspruch 1 oder 2,
**dadurch gekennzeichnet,**
- **dass** eine Bypassleitung (22) vorgesehen ist und
- **dass** die Steuereinheit (20) eingerichtet ist, mittels der Pumpe (12) einen Volumenstrom durch die Filtereinheit (10) und durch die Bypassleitung (22) zu erzeugen.

4. Leitungsanordnung nach einem der Ansprüche 1 bis 3,
**dadurch gekennzeichnet,**
**dass** ein Rückflussverhinderer (28, 28) in dem Leitungsabschnitt (8) und/oder dem Bypass (22) angeordnet ist.

5. Verfahren zum Betreiben einer Leitungsanordnung zur Vorbehandlung von Trinkwasser,
- bei dem ein Volumenstrom durch eine Filtereinheit durch Entnahme von Trinkwasser erzeugt wird,
- bei dem der Druckabfall über die Filtereinheit gemessen wird,
- bei dem bei Erreichen des Druckabfalls oberhalb eines ersten Grenzwertes eine Pumpe zum Erzeugen eines Druckausgleichs eingeschaltet wird und
- bei dem bei Unterschreiten des Druckabfalls unterhalb eines zweiten Grenzwertes die Pumpe abgeschaltet wird.

6. Verfahren nach Anspruch 5,
bei dem nach einer vorgegebenen Zeitdauer nach einem letzten Einschalten die Pumpe für ein Erzeugen eines Volumenstroms durch die Filtereinheit und durch eine Bypassleitung eingeschaltet wird.

## Claims

1. Piping arrangement for the pre-treatment of drinking water
- with an inlet pipe (4) and an outlet pipe (6),
- with a pipe section (8) arranged between the inlet pipe (4) and the outlet pipe (6),
- with at least one filter unit (10) arranged in the pipe section (8) and
- with a pump (12) arranged in the pipe section (8) and
**characterised**
- **in that** a measuring device (14; 14a, 14b) is provided for measuring the pressure difference between the inlet (16) and the outlet (18) of the filter unit (10),
- **in that** a control unit (20) connected to the measuring device (14; 14a, 14b) is provided,
- **in that** the control unit (20) is configured to, above a predetermined first limit value of the pressure difference, actuate the pump (12) in order to at least partially equalise the pressure difference, and
- **in that** the control unit (20) is configured to, below a predetermined second limit value, switch off the pump (12).

2. Piping arrangement according to claim 1,
**characterised in that** the filter of the at least one filter unit (10) is made of ceramic, in particular of a ceramic membrane, or of stainless steel, in particular of a stainless steel membrane.

3. Piping arrangement according to claim 1or 2,
**characterised**
- **in that** a bypass line (22) is provided and
- **in that** the control unit (20) is configured to generate a volume flow through the filter unit (10) and through the bypass line (22) by means of the pump (12).

4. Piping arrangement according to one of claims 1 to 3,
**characterised**
**in that** a backflow preventer (28, 28) is arranged in the pipe section (8) and/or the bypass (22).

5. Method for operating a piping arrangement for the pretreatment of drinking water,
- in which a volume flow through a filter unit is generated by extracting drinking water,
- in which the pressure drop across the filter unit is measured,
- in which, when reaching the pressure drop above a first limit value, a pump is switched on to generate a pressure equalisation, and
- in which, when the pressure drop falls below a second limit value, the pump is switched off.

6. Method according to claim 5,
in which, after a preset period of time following a last switch-on, the pump is switched on to generate a volume flow through the filter unit and through a bypass line.

## Revendications

1. Disposition des conduites pour le prétraitement de l'eau potable,
- avec un conduit d'entrée (4) et un conduit de sortie (6),
- avec une section de conduite (8) disposée entre la conduite d'entrée (4) et la conduite de sortie (6),
- avec au moins une unité de filtration (10) disposée dans la section de conduite (8) et
- avec une pompe (12) disposée dans la section de conduite (8) et
**caractérisé**
- **en ce qu'**un dispositif de mesure (14 ; 14a, 14b) est prévu pour mesurer la différence de pression entre l'entrée (16) et la sortie (18) de l'unité de filtration (10),
- **en ce qu'**une unité de commande (20) reliée au dispositif de mesure (14 ; 14a, 14b) est prévue,
- **en ce que** l'unité de commande (20) est configurée pour, au-dessus d'une première valeur limite prédéfinie de la différence de pression, commander la pompe (12) pour compenser au moins partiellement la différence de pression et
- **en ce que** l'unité de commande (20) est configurée pour, en dessous d'une deuxième valeur limite prédéfinie, arrêter la pompe (12).

2. Dispositif des conduites selon la revendication 1,
**caractérisé en ce que** le filtre de l'au moins une unité de filtration (10) est fabriqué en céramique, en particulier en une membrane en céramique, ou en acier inoxydable, en particulier en une membrane en acier inoxydable.

3. Dispositif des conduites selon la revendication 1 ou 2,
**caractérisé**
- **en ce qu'**il est prévu une conduite de dérivation (22) et
- **en ce que** l'unité de commande (20) est configurée pour générer, au moyen de la pompe (12), un flux volumique à travers l'unité de filtration (10) et à travers la conduite de dérivation (22).

4. Dispositif des conduites selon l'une des revendications 1 à 3,
**caractérisé en ce qu'**un clapet anti-retour (28, 28) est disposé dans la section de conduite (8) et/ou dans la dérivation (22).

5. Procédé d'actionnement d'un dispositif des conduites pour le prétraitement de l'eau potable,
- dans lequel un flux volumique est généré à travers une unité de filtration en prélevant de l'eau potable,
- dans lequel la chute de pression à travers l'unité de filtration est mesurée,
- dans lequel, lorsque la chute de pression au-dessus d'une première valeur limite est atteinte, une pompe est mise en marche pour générer une compensation de pression et
- dans lequel, lorsque la chute de pression est inférieure à une deuxième valeur limite, la pompe est arrêtée.

6. Procédé selon la revendication 5,
dans lequel, après une période de temps prédéterminée suivant une dernière mise en marche, la pompe est mise en marche pour générer un flux volumique à travers l'unité de filtration et à travers une conduite de dérivation.
